(19) Europäisches Patentamt
European Patent Office
Office européen des brevets

(11) **EP 2 792 098 B1**

(12) **EUROPEAN PATENT SPECIFICATION**

(45) Date of publication and mention
of the grant of the patent:
**09.12.2015 Bulletin 2015/50**

(21) Application number: **12798326.0**

(22) Date of filing: **11.12.2012**

(51) Int Cl.:
*H04L 9/08* (2006.01)     *H04L 9/30* (2006.01)
*H04L 9/32* (2006.01)

(86) International application number:
**PCT/EP2012/075091**

(87) International publication number:
**WO 2013/087629 (20.06.2013 Gazette 2013/25)**

(54) **GROUP ENCRYPTION METHODS AND DEVICES**

GRUPPENVERSCHLÜSSELUNGSVERFAHREN UND VORRICHTUNGEN

PROCÉDÉS ET DISPOSITIFS DE CRYPTAGE DE GROUPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2011 EP 11306672**

(43) Date of publication of application:
**22.10.2014 Bulletin 2014/43**

(73) Proprietor: **Thomson Licensing
92130 Issy-les-Moulineaux (FR)**

(72) Inventors:
• **EL AIMANI, Laïla
F-35576 Cesson-Sevigne (FR)**
• **JOYE, Marc
F-35576 Cesson-Sevigne (FR)**

(74) Representative: **Ståhl, Björn Niclas
Technicolor
1, rue Jeanne d'Arc
92443 Issy-les-Moulineaux (FR)**

(56) References cited:
**US-A1- 2008 101 610**

• **JULIEN CATHALO ET AL: "Group Encryption:
Non-interactive Realization in the Standard
Model", 6 December 2009 (2009-12-06),
ADVANCES IN CRYPTOLOGY Â ASIACRYPT
2009, SPRINGER BERLIN HEIDELBERG, BERLIN,
HEIDELBERG, PAGE(S) 179 - 196, XP019134477,
ISBN: 978-3-642-10365-0 cited in the application
the whole document**
• **AGGELOS KIAYIAS ET AL: "Group Encryption",
2 December 2007 (2007-12-02), ADVANCES IN
CRYPTOLOGY Â ASIACRYPT 2007; [LECTURE
NOTES IN COMPUTER SCIENCE], SPRINGER
BERLIN HEIDELBERG, BERLIN, HEIDELBERG,
PAGE(S) 181 - 199, XP019083744, ISBN:
978-3-540-76899-9 cited in the application the
whole document**
• **LAILA EL AIMANI ET AL: "Toward Practical
Group Encryption", INTERNATIONAL
ASSOCIATION FOR CRYPTOLOGIC
RESEARCH,, vol. 20120323:201723, 23 March
2012 (2012-03-23), pages 1-33, XP061006023,
[retrieved on 2012-03-23]**

**Description**

TECHNICAL FIELD

The present invention relates generally to cryptography, and in particular to group encryption.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In this section, the group encryption primitive is defined, the necessary building blocks - public key encryption, tag-based encryption, and one-time signatures - are presented, and the state-of-the-art in group encryption is described.

Group encryption was introduced by Kiayias-Tsiounis-Yung as an encryption analogue of group signature; see Aggelos Kiayias, Yiannis Tsiounis, and Moti Yung: "Group Encryption", ASIACRYPT 2007: pp. 181-199. Group encryption is useful in situations where it is desired to conceal a recipient (decryptor) within a group of legitimate users.

An illustrative example is a network service provider (NSP) that wants to send certain ads to a subscribed customer whose profile matches the ads to be sent. At the same time, the NSP wants to prove to its client, i.e. the company that pays the NSP for sending the ads, that it did indeed send the ads in question within his group of subscribers, while keeping the exact identity of the recipient a secret. The privacy of the ad's recipient should also be preserved within the group of the NSP's subscribers.

Group encryption constitutes a plausible solution to this problem as it allows a sender (the NSP in the example) to encrypt a message (the ad) for a targeted user, and additionally makes it possible for a verifier to check that the formed ciphertext is valid (e.g. that the corresponding plaintext satisfies some relation) and that some anonymous member from the subscribers's group is able to decrypt it. Group encryption also supports the functionality of opening the ciphertext and recovering down the recipient's identity in case of disputes by a designated authority.

More formally, a group encryption (GE) scheme involves a group manager (GM) who registers group members, and an opening authority (OA) that is capable of recovering the identity of the recipient from the corresponding ciphertext.

The main procedures that underlay a GE scheme are:

- **Join.** An interactive protocol between the GM and a potential group member. The GM issues a certificate $cert_i$ on the group member's public key $pk_i$. The GM further stores the pair ($pk_i, cert_i$) in a public database DB.

- **Encrypt.** Produces a ciphertext c on an input message $m$ under a targeted group member's public key $pk$ with regard to an input tag $t$, which is a binary string that specifies the context of the encryption. In order to prevent sending bogus messages, it is required that the message m to be encrypted satisfies some a priori relation: m is a "witness" of an "instance" x (public value) with respect to a relation R; i.e. $(m,x) \in R$. In this sense, Encrypt also outputs the instance x corresponding to the encrypted witness.

- **Decrypt.** Recovers the message m encrypted in an input ciphertext $c$ with regard to the input tag $t$ using a private key $sk$ corresponding to the public key $pk$ under which the ciphertext was created. The procedure further checks whether the recovered message is a witness of the input instance x, i.e $(m,x) \in R$. If this is the case, then the algorithm outputs m, otherwise it outputs Fail.

- **Open.** Inputs a ciphertext $c$, a tag $t$, and the private key of the OA, and recovers the public key $pk$ under which the ciphertext was created with regard to the input tag $t$.

- **Prove.** Provides proof, interactive or non-interactive, from the entity that creates a ciphertext to any verifier. The verifier should be convinced that the ciphertext in question is valid (for instance, that the underlying message satisfies the relation R) and that it can be decrypted by some anonymous registered group member.

A public key encryption (PKE) scheme comprises a key generation algorithm that generates pairs of the form (public key, private key), an encryption algorithm which produces an encryption of an input message using the public key of the recipient, and a decryption algorithm which recovers the message encrypted in an input ciphertext using the proper private key.

A tag-based encryption scheme (TBE) further requires an additional argument, a tag, for both the encryption and decryption. Informally, a tag is a binary string of appropriate length which specifies information about the encryption (date, context, etc...).

One-time digital signature schemes can be used to sign, at most, one message; otherwise, signatures can be forged. A new public key is required for each message that is signed. They are, like 'normal' digital signatures, defined by the key generation algorithm, the signing algorithm, and the verification algorithm. The security of one-time signature schemes relies on the difficulty, given a public key, to come up with a new valid pair of message and corresponding signature.

The paper by Kiayias-Tsiounis-Yung mentioned hereinbefore provides a generic construction for a secure Group Encryption scheme that uses a digital signature scheme S for certification of the users public keys, a tag-based encryption scheme $E_1$ for encrypting the message, another tag-based encrypting scheme $E_2$ for encrypting the recipient public key, and a commitment scheme for committing to the used key and to its certificate. In more detail, the scheme works as follows:

- **Join.** The GM produces a signature s (in other words a certificate) on the user's public key *pk* using its private signing key S.*sk*. The GM further stores (*pk,s*) in the public database DB.
- **Encrypt$_{\{pk\}}$(*m,t*).** To encrypt a message *m* (such that $(m,x) \in R$, where x is a public value) for a recipient with public key *pk* with regard to a tag *t*, Alice:

  o creates commitments $c_3$ on *pk* and $c_4$ on the certificate,
  o encrypts *pk* with regard to a tag $(t,c_3,c_4)$ under public key $pk_{OA}$ of the opening authority using $E_2$.Encrypt, giving a resuft $c_2$,
  o encrypts *m* with regard to a tag $(t,c_2,c_3,c_4)$ under the public key *pk* using $E_1$.Encrypt, giving a result $c_1$,
  o returns the tuple $(c_1,c_2,c_3,c_4)$ as a group encryption of *m* under *pk* with regard to *t*.

- **Decrypt$_{\{sk\}}$(*c,t,x*).** First parses *c* as $(c_1,c_2,c_3,c_4)$, then calls $E_1$.Decrypt on $c_1$ and $(t, c_2,c_3,c_4)$ using the private key *sk* and returns the result, say m, if $(m,x) \in R$ and "fail" otherwise.
- **Open$_{\{skOA\}}$(*c,t*).** First parses c as $(c_1,c_2,c_3,c_4)$, then calls $E_2$.Decrypt on $c_2$ and $(t,c_3,c_4)$ using the private key of the OA $sk_{OA}$ and returns the result.
- **Prove(*c,t,x*).** Alice, the entity that created the ciphertext $c = (c_1,c_2,c_3,c_4)$, with regard to the tag *t* provides a proof that the ciphertext is valid and can be decrypted by the private key corresponding to the public key, encrypted in $c_2$, and committed to in $c_3$ whose certificate is committed to in $c_4$. Alice further proves that the message underlying the ciphertext is a witness for x with regard to the public relation R. Alice uses the private coins (i.e. random values used to generate the commitments $c_3$ and $c_4$, and the encryptions $c_1$ and $c_2$) used to generate *c* in order to provide the proof hereinbefore.

Cathalo-Libert-Yung has provided a concrete realization of a Group Encryption scheme, see Julien Cathalo, Benoît Libert, Moti Yung: "Group Encryption: Non-interactive Realization in the Standard Model", ASIACRYPT 2009: pp. 179-196. The scheme uses Shacham's encryption scheme [see Hovav Shacham: "A Cramer-Shoup Encryption Scheme from the Linear Assumption and from Progressively Weaker Linear Variants", Cryptology ePrint Archive, Report 2007/074] for encrypting the message, and Kiltz' encryption [see Eike Kiltz: "Chosen-Ciphertext Security from Tag-Based Encryption", TCC 2006: pp. 581-600] for encrypting the public key of the recipient. The solution departs from the construction provided by Kiayias-Tsiounis-Yung by waiving the commitments $c_3$ and $c_4$ to the proof underlying the Prove procedure.

More precisely, if S refers to a digital signature scheme given in the paper, OTS refers to any secure one-signature scheme, [Kiltz] refers to Kiltz's encryption scheme and [Shacham] refers to Shacham's encryption scheme, the scheme is defined by:

- **Join** On an input public key *pk,* the GM produces a signature (or a certificate) using its private signing key S.*sk* and stores (*pk,cert*) in a public database DB.
- **Encrypt$_{\{pk\}}$(*m,t*)** To encrypt a message *m* (where *m* is the Diffie-Hellman solution of some (*x,y*): $e(m,g)=e(x,y)$, where e is the pairing underling the message space, say G, and *g* is a generator of this group) for a recipient with public key *pk* with regard to a tag *t,* Alice:

  - calls OTS.keygen to generate a pair of signing and verifying keys (OTS.sk,OTS. *vk*).
  - creates $c_1$ = [Schacham].Encrypt$_{\{pk\}}$(m,(OTS.*vk,t*)) and $c_2$ = [Kiltz].Encrypt$_{\{pkOA\}}$(*pk*,OTS.vk). The tag used for $c_1$ is (OTS.*vk,t*) and the tag used for $c_2$ is the verification key OTS.*sk*.
  - produces a one-time signature s on $(c_1,c_2,t)$ using OTS.*sk*; s = OTS.Sign$_{\{OTS.sk\}}$($c_1,c_2,t$).
  - returns $c = (c_1,c_2,OTS.vk,s)$ as a group encryption of *m* under *pk* with regard to *t*.

- **Decrypt$_{\{sk\}}$(*c,t,x,y*)**

  - parse c as $(c_1,c_2,OTS.vk ,s)$.
  - check the signature *s* on $(c_1,c_2,t)$ with regard to OTS.*vk*; if OTS.Verify$_{\{OTS.vk\}}$(s,($c_1,c_2c,t$)) = 0 return Fail, else compute [Shacham].Decrypt$_{\{sk\}}$($c_1$,(OTS.*vk,t*): return the computed value if it is the Diffie-Hellman solution for (x,y), otherwise return Fail.

- **Open$_{\{skOA\}}$(*c,t*)**

  - parse c as $(c_1,c_2, OTS.vk, s)$.
  - check the signature *s* on $(c_1,c_2,t)$ with regard to OTS.*vk*; if OTS.Verify$_{\{OTS.vk\}}$(s,($c_1,c_2,t$)) = 0 return Fail, else call [Kiltz].Decrypt$_{\{skOA\}}$($c_2$,OTS.*vk*) and return its result.

- **Prove(*c,t,x,y*).** Alice, the entity that created the ciphertext c with regard to the tag *t* provides a non-interactive proof that c is well formed, and that it can be decrypted by some anonymous member that has a certified public key.

The schemes provided by Kiayias-Tsiounis-Yung and Cathalo-Libert-Yung achieve secure Group Encryption by instantiating the construction with encryption schemes that satisfy the strong security notions (i.e. encryption schemes that are secure against powerful adversaries). According to the used building blocks, the resulting realizations compare as follows:

1. Kiayias-Tsiounis-Yung: their instantiation of the generic construction achieves a ciphertext of size 2.5 kB using 1024-bit moduli, and a proof of size 70 kB. Moreover, the proof entails interaction with the verifier, and thus requires the prover to remember all the randomness used to generate the ciphertext if she wants to run several times the same proof.

2. Cathalo-Libert-Yung improves upon the above scheme; it achieves a smaller ciphertext, 1.25 kB using 256-bit moduli, and a smaller proof, 16.125 kB. Moreover, the proof has the merit of being non-interactive and thus does not require a stateful prover. However, the proof makes use of the expensive Groth-Sahai proof system which requires hundreds or thousands of pairing equations verifications that render it fairly impractical.

The skilled person will thus realise that both Kiayias-Tsiounis-Yung and Cathalo-Libert-Yung remain rather expensive due to the size or cost of the ciphertext and the proof.

For instance, both Kiayias-Tsiounis-Yung and Cathalo-Libert-Yung resort to encrypting each component of the public key - the public key always consists of a vector of group elements - and as a consequence apply the same expensive (in terms of resource use) encryption ("E2" or [Kiltz]) $n$ times, where $n$ denotes the number of elements in the public key of the recipient.

The skilled person will appreciate that there is a need for a solution that provides an improved GE scheme. This invention provides such a solution.

SUMMARY OF INVENTION

In a first aspect, the invention is directed to a method of group encrypting a plaintext $m$ with regard to a tag $t$ for a recipient with a public key $pk$ to obtain a ciphertext c. A device obtains a signing key OTS.$sk$ and a verifying key OTS.$vk$; creates a first encrypted value $c_1$ and a second encrypted value $c_2$, by calculating. $c_1 =$ $E_1$.Encrypt$_{\{pk\}}$(m,OTS.$vk$) and $c_2 = E_2$.Encrypt$_{\{pkOA\}}$($f(pk)$,OTS.$vk$), wherein $E_1$ is a first encryption algorithm, $E_2$ is a second encryption algorithm and $f$ is a mapping function; produces a signature s on the first encrypted value $c_1$, the second encrypted value $c_2$ and the tag $t$ using the signing key OTS.$sk$ by calculating $s =$ OTS.Sign$_{\{OTS·sk\}}$($c_1,c_2,t$), wherein OTS.Sign is a signature algorithm; and outputs the ciphertext c, wherein the ciphertext c comprises the first encrypted value $c_1$, the second encrypted value $c_2$, the verifying key OTS.$vk$ and the signature s.

In a first preferred embodiment, the message m satisfies a publicly verifiable relation R.

In a second aspect, the invention is directed to a method of decrypting a group encryption c comprising a first encrypted value $c_1$, a second encrypted value $c_2$, a verifying key OTS.$vk$ and a signature s, wherein the signature s is on the first encrypted value $c_1$, the second encrypted value $c_2$ and a tag $t$. A device receives the group encryption c; verifies the signature s with regard to a verifying key OTS.$vk$; and if the signature s is successfully verified, decrypts the first encrypted value $c_1$ using an decryption algorithm $E_1$ and the verifying key OTS.$vk$.

In a first preferred embodiment, verifying the signature further comprises verifying that a decryption of the first encrypted value $c_1$ satisfies a public relation R.

In a third aspect, the invention is directed to a device for group encrypting of a plaintext $m$ with regard to a tag $t$ for a recipient with a public key $pk$ to obtain a ciphertext c. The device comprises a processor configured to: obtain a signing key OTS.$sk$ and a verifying key OTS.$vk$; create a first encrypted value $c_1$ and a second encrypted value $c_2$, by calculating $c_1 = E_1$.Encrypt$_{\{pk\}}$($m$,OTS.$vk$) and $c_2 = E_2$.Encrypt$_{\{pkOA\}}$($f(pk)$,OTS.$vk$), wherein $E_1$ is a first encryption algorithm, $E_2$ is a second encryption algorithm and $f$ is a mapping function; produce a signature s on the first commitment $c_1$, the second commitment $c_2$ and the tag $t$ using the signing key OTS.$sk$ by calculating $s =$ OTS.Sign$_{\{OTS.sk\}}$($c_1,c_2,t$), wherein OTS.Sign is a signature algorithm; and output the ciphertext c, wherein the ciphertext c comprises the first encrypted value $c_1$, the second encrypted value $c_2$, the verifying key OTS.$vk$ and the signature s.

In a first preferred embodiment, the message m satisfies a publicly verifiable relation R.

In a fourth aspect, the invention is directed to a device for decrypting a group encryption c comprising a first encrypted value $c_1$, a second encrypted value $c_2$, a verifying key OTS.$vk$ and a signature s, wherein the signature s is on the first encrypted value $c_1$, the second encrypted value $c_2$ and a tag $t$. The device comprises a processor configured to: receive the group encryption c; verify the signature s with regard to a verifying key OTS.$vk$; and if the signature s is successfully verified, decrypt the first encrypted value $c_1$ using an decryption algorithm $E_1$ and the verifying key OTS.$vk$.

In a first preferred embodiment, the processor further verifies that a decryption of the first encrypted value $c_1$ satisfies a public relation R.

In a fifth aspect, the invention is directed to a computer program product having stored thereon instructions that, when executed by a processor, perform the method of the first aspect.

In a sixth aspect, the invention is directed to a computer program product having stored thereon instructions that, when executed by a processor, perform the method of the second aspect.

BRIEF DESCRIPTION OF DRAWINGS

Preferred features of the present invention will now be described, by way of non-limiting example, with reference to the accompanying drawings, in which:

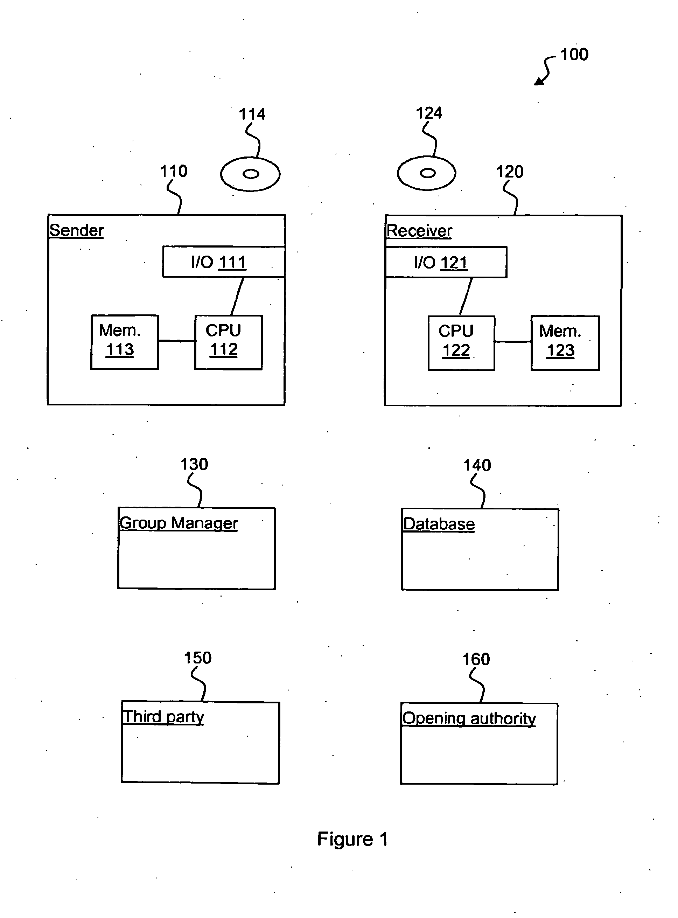

Figure 1 illustrates a Group Encryption system according to a preferred embodiment of the invention.

DESCRIPTION OF EMBODIMENTS

A main inventive idea of the present invention is to encrypt an alias of the recipient's public key instead of the public key itself. The Group Manager (GM) publishes the public key, the corresponding encryption of the alias and certificate in the public database DB. The alias is a resulting value of a suitably chosen mapping function $f$ applied on the public key.

Calculations using the function $f$ are preferably easy to perform, the function preferably reduces the size of the input, and two different input values should not result in identical entries in the database DB. The mapping function $f$ may be said to be a sort of hash function that is collision resistant by having the group manager ensures this property by, for example, randomizing a new message until its entry in the database is unique.

This can allow a significant decrease in the size and cost of the resulting construction as the alias can be made smaller than the public key. In particular, there is no need to apply the second encryption scheme as many times as there are group elements in the recipient's public key.

However a drawback is that, in the Open procedure, the opening authority OA is required to look in the database DB for the preimage (public key) of the alias. Fortunately, the recourse to the Open procedure occurs very rarely; i.e. only in case of disputes.

The Group Encryption scheme of the present invention uses a number of building blocks (examples will be given later in the description):

- **Encryption schemes:** two encryption schemes $E_1$ and $E_2$ are used. It has to be noted that for the purpose of the invention, it is sufficient that $E_1$ and $E_2$ are weakly secured, as defined below:

    A weakly secure encryption scheme is one that does not reach the "highest" security notion. The correct security notion for $E_1$ is indistinguishable and anonymous under selective tag weak chosen ciphertext attacks (IND-st-wCCA and ANO-st-wCCA). For $E_2$ only IND-st-wCCA security is required.
    Both security notions combine a security goal (IND or ANO) and an attack model (st-wCCA). The indistinguishability (IND) goal informally denotes the difficulty to get information about the message from the ciphertext. Anonymity (ANO) refers to the difficulty to infer information about the public key from the ciphertext.
Concerning the attack model st-wCCA, it refers to the scenario where the attacker commits beforehand (before receiving the challenge public key) to the tag she wishes to be challenged on, and she is not allowed to issue decryption queries which involve this challenge tag.

- **Signature or certification schemes:** a signature scheme that signs group elements is used. A suitable candidate is a structure-preserving signature scheme S, i.e. a scheme where the verification key, messages, and signatures are group elements, and where the verification algorithm consist of a predicate of pairing equation verifications.
- **One-time signature schemes:** a secure one-time signature OTS is used.
- **Relation R:** a relation that is publicly verifiable is used.
  **Function f:** a function f which is efficiently computable (can be evaluated in polynomial time in the size of the input) is used.

Using these building blocks, the scheme is constructed as follows:

- **Join.** On an input public key pk, GM computes f(pk) in addition to a signature (or a certificate) cert on pk using S.sk (S is the used certification scheme). GM further stores (pk,f(pk),cert) in a public database DB. Note that GM may proceed to simple measures in order to avoid collisions, i.e. avoid that two different public keys pk and pk' map to the same value using f. One possible measure in case a particular function f is used will be detailed hereinafter.
- **Encrypt$_{\{pk\}}$($m,t$).** To encrypt a message $m$ (which is a witness of some x with regard to a known relation R) for a recipient with public key $pk$ with regard to a tag $t$, an entity:

    - Calls OTS.keygen to generate a pair of signing and verifying keys (OTS.$sk$, OTS.$vk$).
    - Creates $(c_1,c_2)$ = ($E_1$.Encrypt$_{\{pk\}}$($m$,OTS.$vk$), $E_2$.Encrypt$_{\{pkOA\}}$($f(pk)$,OTS.$vk$)). It will be noted that OTS.$vk$ is considered as a tag.
    - Produces a signature $s$ on $(c_1,c_2,t)$ using OTS.$sk$; $s$ = OTS.Sign$_{\{OTS.sk\}}$($c_1,c_2,t$).
    - Return $c$ = ($c_1,c_2$,OTS.$vk,s$) as a group encryption of $m$ under $pk$ with regard to $t$.

- **Decrypt$_{\{sk\}}$($c,t,x$).**

    - Parse $c$ as ($c_1,c_2$,OTS.$vk$,s).
    - Verify the signature $s$ on $(c_1,c_2,t$) with regard to OTS.$vk$. If OTS.Verify$_{\{OTS.vk\}}$($s,(c_1,c_2,t$)) = 0 return Fail, else compute $E_1$.Decrypt$_{\{sk\}}$($c_1$, OTS.$vk$): return the computed value if it is a witness for x with regard to R, otherwise return Fail.

- **Open$_{\{skOA\}}$(c,t).**

  - Parse $c$ as $(c_1,c_2,\text{OTS}.vk,s)$.
  - Verify the signature $s$ on $(c_1,c_2,t)$ with regard to OTS.$vk$. If OTS.Verify$_{\{OTS.vk\}}(s,(c_1,c_2,t)) = 0$ return Fail, else call E$_2$.Decrypt$_{\{skOA\}}(c_2$, OTS.$vk)$ which returns a value $F$.
  - Look up DB for the preimage of the value $F$ with regard to the function $f$, and return the result of this search.

- **Prove(c,t,x).** The entity that created the ciphertext $c$ with regard to the tag $t$ provides the following proofs using the random coins used to generate $c = (c_1,c_2,\text{OTS}.vk,s)$:

  - Proof of knowledge of the message underlying $c_1$ with regard to tag OTS.$vk$ under some public key $pk$ and that this message is a witness for x with regard to the relation R.
  - Proof of knowledge of the decryption of $c_2$ with regard to tag OTS.$vk$ under the key $pk_{OA}$ and that this decryption is the value of the function $f$ on $pk$.
  - Proof of knowledge of a certificate *cert* on $pk$.

Certain classes of signature and encryption schemes allow an efficient performance of these proofs.

For non-interactive proofs, it is preferred to use components that accept efficient non-interactive proofs of knowledge of the witness in question (e.g. message or key in case of signature/encryption schemes, preimage in case of the function f or witness in case of the relation R) such as Groth-Sahai [Jens Groth, Amit Sahai: Efficient Non-interactive Proof Systems for Bilinear Groups. EUROCRYPT 2008: 415-432] compatible cryptosystems. In this sense, one can use the so-called automorphic signatures (i.e. signature schemes where the verification key message and resulting signature are group elements and where the verification algorithm consists of a conjunction of pairing product equations) and encryption schemes where the encryption algorithm performs group or pairing operations on the input (this entails that the message, public key and ciphertext are group elements). The function f also performs group (or pairing in case of bilinear groups) operations on the input. The same thing applies for the relation R.

Similarly, it is preferred to use components that accept efficient interactive proofs of the witness. In this sense, it is preferred to use signature schemes that make it possible to define a homomorphic function $\varphi$, given a signature $\sigma$ on a message $M,$ such that $\varphi(S,M)$ evaluates to $g(R,vk)$ where $vk$ is the verification key, $g$ is a public function, and $(S,R)$ is a pair converted from $\sigma$ where $R$ reveals no information about $\sigma$ or $M,$ and $S$ is a "vital" part of the signature; the underlying conversion algorithm is referred to as the CONVERT algorithm. It is also preferred to use encryption schemes that accept efficient proofs of correctness of a decryption with regard to a given key and a given tag. Morever, the scheme used to encrypt the public key (E$_2$) should be homomorphic with regard to the message and the scheme E$_1$ should be homomorphic with regard to both the public key and the message. Further, encryption scheme E$_1$ comes with an algorithm, referred to as the COMPUTE algorithm, which on input an encryption $c_1$ of a message $m$ under a public key $pk$ with respect to a given tag $t$ produces another encryption $c'_1$ of another message $m'$ under another public key $pk'$ with respect to the same tag $t$ such that the composition of $c_1$ and $c'_1$ is equal to the encryption of the composition of $m$ and $m'$ under the composition of $pk$ and $pk'$ with respect to tag $t;$ wherein composition has to be understood as applying the algebraic group operation equipping the set the involved elements belong to. Moreover, the function f is preferably a homomorphic function (f applied to the composition of two inputs is the composition of the values of f at these two inputs). And similarly, the relation R should allow, given an instance x, to define a homorphic function F_R and an image I such that F_R(w)= I, where w is the witness corresponding to the instance x.

A preferred signature scheme for use with the present invention is the scheme proposed by Masayuki Abe, Georg Fuchsbauer, Jens Groth, Kristiyan Haralambiev and Miyako Ohkubo in "Structure-Preserving Signatures and Commitments to Group Elements"; CRYPTO 2010: 209-236.

A preferred encryption scheme for use with the present invention is the weakly secure tag-based variant provided by David Cash, Eike Kiltz and Victor Shoup in "The Twin Diffie-Hellman Problem and Applications"; Journal of Cryptology 22(4): 470-504 (2009).

A preferred function f, if the public keys are n-vectors of group elements, is the following:

- $f$: $G^n \rightarrow G$

  $(X_1,...,X_n) \rightarrow X_1^{a_1} \cdots X_n^{a_n}$

  where $(G,\cdot)$ is a group with order some $d,$ $n$ is some integer, and $a_1,...,a_n$ are public elements from $\mathbf{Z}_d,$ i.e. the set of integers modulo $d.$ The function f maps then a tuple of $n$ elements in group G to an element in group G.

  With this choice of f, GM can avoid collisions by systematically randomizing the key pk. More precisely, GM considers a random $r = (r_1,..., r_n)$ in the exponent group $\mathbf{Z}_d$ to randomize $pk$ in order to avoid collisions for the function $f;$ $pk = (X_1,... ,X_n) \leftarrow pk^r = (X_1^{r_1},...,X_n^{r_n}).$ GM further publishes $r$ to allow the recipient to update its private key accordingly - this is only possible when $\mathbf{X_i = g_i^{x_i}},$ where $g_i$ are known generators of G, and $x_i$ is the private key corresponding to $X_i.$ The certificate is computed on the newly computed public key and stored along with the key and its alias in DB.

Finally a preferred relation R is $(m,x,y) \in R \leftrightarrow e(m,P)=e(x,y)$ where e is an efficient pairing with domain $G \times H$ (G and H are cryptographic bilinear groups), and P is a fixed element from H.

The interactive Prove protocol between the prover who generated the ciphertext c for receiver with public key $pk$ and any verifier proceeds in three passes: commitment, challenge, and response. In the commitment pass, the prover runs the CONVERT algorithm on input the group manager's public key $S.pk$, public $pk$ and corrresponding certificate to obtain the pair $(S, R)$. The prover also runs the COMPUTE algorithm on input $c_1$ and obtains the tuple $(pk', m', c'_1)$. Next, the prover computes $F'=f(pk')$, $I'\_R=F\_R(m')$, and $I'=\varphi(S', pk')$. Finally, the prover computes $c'_2$ which is the encryption of $F'$ under public key $pk_{OA}$. The prover sends the tuple $(R, I', I'\_R, c'_2)$ to the verifier. Upon receiving this tuple, in the challenge pass, the verifier selects at random an integer $b$ and computes $I = g(R, S.pk)$ and $I\_R$ such that $F\_R(m)=I\_R$. The verifier sends the challenge $b$ to the prover. Upon receiving this challenge, the prover computes and sends the values $z_S$, $z_{pk}$, $z_m$ and $z_F$ where $z_{pk}$ is the composition of $pk'$ and $pk^b$, $z_s$ is the composition of $S'$ and $S^b$, $z_m$ is the composition of $m'$ and $m^b$, and $z_F$ is the composition of $F'$ and $F^b$. Finally, the prover proves the knowledge that (PoK1) the composition of $c'_1$ and $c_1^b$ is the encryption of $z_m$ under public key $z_{pk}$ with respect to tag $t$, and (PoK2) the composition of $c'_2$ and $c_2^b$ is the encryption of $z_F$ under public key $pk_{OA}$ with respect to tag $t$. At the end of protocol, the verifier accepts if (1) $\varphi(z_S, z_{pk})$ is equal to the composition of $I'$ and $I^b$, (2) $F\_R(z_m)$ is the composition of $I'\_R$ and $I^b\_R$, (3) $f(z_{pk})$ is equal to $z_F$, and (4) PoK1 and PoK2 are valid. The skilled person will observe that, when instantiated with the preferred encryption schemes, the proofs of knowledge PoK1 and PoK2 boil down to showing the equality of discrete logarithms; efficient methods thereof can be derived from the seminal work of Claus P. Schnorr, "Efficient signature generationby smart cards", Journal of Cryptology, 4(3):161-179, 1991. See also Jan Camenisch, "Group signature schemes and payment systems based on the discrete logarithm problem", PhD thesis, vol. 2 of ETH Series in Information Security and Cryptography, Hartung-Gorre Verlag, 1998 (ISBN 3-89649-286-1).

Figure 1 illustrates a system 100 for group encryption according to a preferred embodiment of the present invention. For ease of illustration and comprehension, the connections between the devices in the system have been omitted.

The system 100 comprises a sender 110 and a receiver 120, each comprising at least one interface unit 111, 121 configured for communication with the other device, at least one processor ("processor") 112, 122 and at least one memory 113, 123 configured for storing data, such as accumulators and intermediary calculation results. The system 100 further comprises a Group Manager 130, a database 140, a third party 150 and an Opening Authority 160; although not illustrated for the sake of clarity, each of these devices comprises the necessary hardware such as processors and memory.

The processor 112 of the sender 110 is configured to perform the Encrypt and Prove parts of the present group encryption scheme, and the processor 122 of the receiver 120 is adapted to decrypt a received group encryption, i.e. perform Decrypt. The Group manager 130 is configured to perform the Join part and thereby store data in the database 140. The third party 150 is configured to verify proofs provided by the sender and the Opening Authority 160 is configured to perform the Open part of the group encryption scheme. A first computer program product 114 such as a CD-ROM or a DVD comprises stored instructions that, when executed by the processor 112 of the sender 110, performs Encryption and Prove according to the invention. A second computer program product 124 comprises stored instructions that, when executed by the processor 122 of the receiver 120, performs Decrypt according to the invention.

The skilled person will appreciate that the Group Encryption scheme of the present invention can allow a significant reduction of the size and cost when compared to prior art schemes. For instance, the GE scheme of the present invention results in a 0.4 kB ciphertext (instead of 1.25 kB or 2.5 kB in the prior art) if it is instantiate with:

- The signature scheme proposed by Masayuki Abe, Georg Fuchsbauer, Jens Groth, Kristiyan Haralambiev and Miyako Ohkubo in "Structure-Preserving Signatures and Commitments to Group Elements"; CRYPTO 2010:209-236.
- The one-time signature provided by Jens Groth, Rafail Ostrovsky and Amit Sahai in "Non-interactive Zaps and New Techniques for NIZK"; CRYPTO 2006: 97-111.
- The weakly secure tag-based variant provided by David Cash, Eike Kiltz and Victor Shoup in "The Twin Diffie-Hellman Problem and Applications"; Journal of Cryptology 22(4): 470-504 (2009) to instantiate $E_1$ and $E_2$.

In addition, the proofs are shorter and can be carried out with or without interaction with the verifier (1 kB for the interactive proof, and 2kB for the non-interactive one), leaving to the latter the choice of performing cheap, interactive proofs, or expensive, non-interactive proofs. Moreover, verification of the proof requires 325 pairing computations (to be compared to 3895 pairing computations in the prior art).

As mentioned previously, the GE scheme of the present invention has the drawback of accessing the database DB in each Open procedure in order to find the preimage of the alias of the public key's. Fortunately, the recourse to Open happens only in case of conflicts, and thus very rarely.

While the present invention has been described in the context of GE, its scope is not limited to this kind of cryptographic schemes. Any cryptographic scheme involving the encryption of (long) messages present in (online) public DB may equally benefit from the invention. Applying the present invention, (short) aliases will be associated with each message of the DB and added to the DB. The encryption of the message will then be replaced with the encryption of the alias, shortening therefore the size of the ciphertext. Upon decryption, the alias will be recovered and, using a request to the online DB, the associated message will also be recovered.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of group encrypting a plaintext $m$ with regard to a tag $t$ for a recipient with a public key $pk$ to obtain a ciphertext $c$, the method comprising at a device (110):

   - creating a first encrypted value $c_1$ and a second encrypted value $c_2$, by calculating $c_1$ = E$_1$.Encrypt$_{\{pk\}}$($m$,OTS.$vk$) and $c_2$ = E$_2$.Encrypt$_{\{pkOA\}}$($f(pk)$,OTS.$vk$), wherein E$_1$ is a first encryption algorithm, E$_2$ is a second encryption algorithm, $pkOA$ is a further public key, OTS.$sk$ is a signing key, OTS.$vk$ is a verifying key and $f$ is a mapping function;
   - producing a signature $s$ on the first encrypted value $c_1$, the second encrypted value $c_2$ and the tag $t$ using the signing key OTS.$sk$ by calculating s = OTS.Sign$_{\{OTS.sk\}}$($c_1$,$c_2$,$t$), wherein OTS.Sign is a signature algorithm; and
   - outputting the ciphertext $c$, wherein the ciphertext c comprises the first encrypted value $c_1$, the second encrypted value $c_2$, the verifying key OTS.$vk$ and the signature s.

2. The method of claim 1, wherein message m satisfies a publicly verifiable relation R.

3. A method of decrypting a group encryption c comprising a first encrypted value $c_1$, a second encrypted value $c_2$, a verifying key OTS.$vk$ and a signature s, wherein the signature s is on the first encrypted value $c_1$, the second encrypted value $c_2$ and a tag $t$ produced according to the method of claim 1 or 2, the method comprising at a device (120):

   - receiving the group encryption $c$;
   - verifying the signature s with regard to a verifying key OTS.vk;
   - if the signature s is successfully verified, decrypting the first encrypted value $c_1$ using a decryption algorithm E$_1$ and the verifying key OTS.$vk$.

4. The method of claim 3, wherein the signature verification further comprises verifying that a decryption of the first encrypted value $c_1$ satisfies a public relation R.

5. A device (110) for group encrypting of a plaintext $m$ with regard to a tag $t$ for a recipient with a public key $pk$ to obtain a ciphertext $c$, the device (110) comprising a processor (112) configured to:

   - create a first encrypted value $c_1$ and a second encrypted value $c_2$, by calculating $c_1$ = E$_1$.Encrypt$_{\{pk\}}$($m$,OTS.$vk$) and $c_2$ = E$_2$.Encrypt$_{\{pkOA\}}$($f(pk)$,$OTS.vk$), wherein E$_1$ is a first encryption algorithm, E$_2$ is a second encryption algorithm, $pkOA$ is a further public key, OTS.$sk$ is a signing key, OTS.$vk$ is a verifying key and $f$ is a mapping function;
   - produce a signature s on the first encrypted value $c_1$, the second encrypted value $c_2$ and the tag $t$ using the signing key OTS.$sk$ by calculating s = OTS.Sign$_{\{OTS.sk\}}$($c_1$,$c_2$,$t$), wherein OTS.Sign is a signature algorithm; and
   - output the ciphertext $c$, wherein the ciphertext c comprises the first encrypted value $c_1$, the second encrypted value $c_2$, the verifying key OTS.$vk$ and the signature s.

6. The device of claim 5, wherein message m satisfies a publicly verifiable relation R

7. A device (120) for decrypting a group encryption c comprising a first encrypted value $c_1$, a second encrypted value $c_2$, a verifying key OTS.$vk$ and a signature $s$, wherein the signature $s$ is on the first encrypted value $c_1$, the second encrypted value $c_2$ and a tag $t$ produced according to the method of claim 1 or 2, the device (120) comprising a processor (122) configured to:

   - receive the group encryption $c$;
   - verify the signature s with regard to a verifying key OTS.$vk$; and
   - if the signature s is successfully verified, decrypt the first encrypted value $c_1$ using a decryption algorithm E$_1$ and the verifying key OTS.$vk$.

8. The device of claim 7, wherein the processor is further configured to verify that a decryption of the first encrypted value $c_1$ satisfies a public relation R.

**9.** A computer program product (114) having stored thereon instructions that, when executed by a processor, perform all the method steps of claim 1 or 2.

**10.** A computer program product (124) having stored thereon instructions that, when executed by a processor, perform all the method steps of claim 3 or 4.

**Patentansprüche**

**1.** Verfahren für die Gruppenverschlüsselung eines Klartexts m hinsichtlich eines Etikettkennzeichens t für einen Empfänger mit einem öffentlichen Schlüssel pk, um einen verschlüsselten Text c zu erhalten, wobei das Verfahren bei einer Vorrichtung (110) umfasst:

- Erzeugen eines ersten verschlüsselten Werts $c_1$ und eines zweiten verschlüsselten Werts $c_2$ durch Berechnen von $c_1 = E_1.\text{Encrypt}_{\{pk\}}(m, \text{OTS.vk})$ und $c_2 = E_2.\text{Encrypt}_{\{pkOA\}}(f(pk), \text{OTS.vk})$, wobei $E_1$ ein erster Verschlüsselungsalgorithmus ist, $E_2$ ein zweiter Verschlüsselungsalgorithmus ist, pkOA ein weiterer öffentlicher Schlüssel ist, OTS.sk ein Signierschlüssel ist, OTS.vk ein Verifizierungsschlüssel ist und f eine Abbildungsfunktion ist;
- Erzeugen einer Signatur s an dem ersten verschlüsselten Wert $c_1$, an dem zweiten verschlüsselten Wert $c_2$ und an dem Etikettkennzeichen t unter Verwendung des Signierschlüssels OTS.sk durch Berechnen von $s = \text{OTS.Sign}_{\{OTS.sk\}}(c_1, c_2, t)$, wobei OTS.Sign ein Signaturalgorithmus ist; und
- Ausgeben des verschlüsselten Texts c, wobei der verschlüsselte Text c den ersten verschlüsselten Wert $c_1$, den zweiten verschlüsselten Wert $c_2$, den Verifizierungsschlüssel OTS.vk und die Signatur s umfasst.

**2.** Verfahren nach Anspruch 1, wobei die Nachricht m einer öffentlich verifizierbaren Beziehung R genügt.

**3.** Verfahren zum Entschlüsseln einer Gruppenverschlüsselung c, die einen ersten verschlüsselten Wert $c_1$, einen zweiten verschlüsselten Wert $c_2$, einen Verifizierungsschlüssel OTS.vk und eine Signatur s umfasst, wobei die Signatur s an dem ersten verschlüsselten Wert $c_1$, an dem zweiten verschlüsselten Wert $c_2$ und an einem Etikettkennzeichen t ist, die in Übereinstimmung mit dem Verfahren nach Anspruch 1 oder 2 erzeugt worden sind, wobei das Verfahren bei einer Vorrichtung (120) umfasst:

- Empfangen der Gruppenverschlüsselung c;
- Verifizieren der Signatur s hinsichtlich eines Verifizierungsschlüssels OTS.vk;
- Entschlüsseln des ersten verschlüsselten Werts $c_1$ unter Verwendung eines Entschlüsselungsalgorithmus $E_1$ und des Verifizierungsschlüssels OTS.vk, falls die Signatur s erfolgreich verifiziert wird.

**4.** Verfahren nach Anspruch 3, wobei die Signaturverifizierung ferner das Verifizieren, dass eine Entschlüsselung des ersten verschlüsselten Werts $c_1$ einer öffentlichen Beziehung R genügt, umfasst.

**5.** Vorrichtung (110) für die Gruppenverschlüsselung eines Klartexts m hinsichtlich eines Etikettkennzeichens t für einen Empfänger mit einem öffentlichen Schlüssel pk, um einen verschlüsselten Text c zu erhalten, wobei die Vorrichtung (110) einen Prozessor (112) umfasst, der konfiguriert ist zum:

- Erzeugen eines ersten verschlüsselten Werts $c_1$ und eines zweiten verschlüsselten Werts $c_2$ durch Berechnen von $c_1 = E_1.\text{Encrypt}_{\{pk\}}(m, \text{OTS.vk})$ und $c_2 = E_2.\text{Encrypt}_{\{pkOA\}}(f(pk), \text{OTS.vk})$, wobei $E_1$ ein erster Verschlüsselungsalgorithmus ist, $E_2$ ein zweiter Verschlüsselungsalgorithmus ist, pkOA ein weiterer öffentlicher Schlüssel ist, OTS.sk ein Signierschlüssel ist, OTS.vk ein Verifizierungsschlüssel ist und f eine Abbildungsfunktion ist;
- Erzeugen einer Signatur s an dem ersten verschlüsselten Wert $c_1$, an dem zweiten verschlüsselten Wert $c_2$ und an dem Etikettkennzeichen t unter Verwendung des Signierschlüssels OTS.sk durch Berechnen von $s = \text{OTS.Sign}_{\{OTD.sk\}}(c_1, c_2, t)$, wobei OTS.Sign ein Signaturalgorithmus ist; und
- Ausgeben des verschlüsselten Texts c, wobei der verschlüsselte Text c den ersten verschlüsselten Wert $c_1$, den zweiten verschlüsselten Wert $c_2$, den Verifizierungsschlüssel OTS.vk und die Signatur s umfasst.

**6.** Vorrichtung nach Anspruch 5, wobei die Nachricht m einer öffentlich verifizierbaren Beziehung R genügt.

**7.** Vorrichtung (120) zum Entschlüsseln einer Gruppenverschlüsselung c, die einen ersten verschlüsselten Wert $c_1$, einen zweiten verschlüsselten Wert $c_2$, einen Verifizierungsschlüssel OTS.vk und eine Signatur s umfasst, wobei die Signatur s an dem ersten verschlüsselten Wert $c_1$, an dem zweiten verschlüsselten Wert $c_2$ und an einem Etikettkennzeichen t ist, die in Übereinstimmung mit dem Verfahren nach Anspruch 1 oder 2 erzeugt worden sind, wobei die Vorrichtung (120) einen Prozessor (122) umfasst, der konfiguriert ist zum:

- Empfangen der Gruppenverschlüsselung c;
- Verifizieren der Signatur s hinsichtlich eines Verifizierungsschlüssels OTS.vk; und
- Entschlüsseln des ersten verschlüsselten Werts $c_1$ unter Verwendung eines Entschlüsselungsalgorithmus $E_1$ und des Verifizierungsschlüssels OTS.vk, falls die Signatur s erfolgreich verifiziert wird.

8. Vorrichtung nach Anspruch 7, wobei der Prozessor ferner konfiguriert ist zum Verifizieren, dass eine Entschlüsselung des ersten verschlüsselten Werts $c_1$ einer öffentlichen Beziehung R genügt.

9. Computerprogrammprodukt (114), auf dem Anweisungen gespeichert sind, die, wenn sie durch einen Prozessor ausgeführt werden, alle Verfahrensschritte nach Anspruch 1 oder 2 ausführen.

10. Computerprogrammprodukt (124), auf dem Anweisungen gespeichert sind, die, wenn sie durch einen Prozessor ausgeführt werden, alle Verfahrensschritte nach Anspruch 3 oder 4 ausführen.


**Revendications**

1. Un procédé de cryptage de groupe d'un texte en clair m par rapport à une balise t pour un destinataire, avec une clé publique pk, afin d'obtenir un cryptogramme c, le procédé comprenant, au niveau d'un dispositif (110) :

   - la création d'une première valeur cryptée $c_1$ et d'une seconde valeur cryptée $c_2$, en calculant $c_1$ = $E_1$.Encrypt$_{\{pk\}}$($m$,OTS.$vk$) et $c_2$ = $E_2$.Encrypt$_{\{pkOA\}}$ ($f(pk)$,OTS.$vk$), où $E_1$ est un premier algorithme de cryptage, $E_2$ est un second algorithme de cryptage, pkOA est une autre clé publique, OTS.sk est une clé de signature, OTS.vk est une clé de vérification et f est une fonction de mappage ;
   - la production d'une signature s sur la première valeur $c_1$, la seconde valeur cryptée $c_2$ et la balise t utilisant la clé de signature OTS.sk en calculant s = OTS.Sign$_{\{OTS.sk\}}$($c_1$,$c_2$,$t$), où OTS.Sign est un algorithme de signature ; et
   - la production du cryptogramme c, dans lequel le cryptogramme c comprend la première valeur cryptée $c_1$, la seconde valeur cryptée $c_2$, la clé de vérification OTS.$vk$ et la signature s.

2. Le procédé selon la revendication 1, dans lequel le message m satisfait une relation R publiquement vérifiable.

3. Un procédé de décryptage d'un cryptage de groupe c comprenant une première valeur cryptée c1, une seconde valeur cryptée $c_2$, une clé de vérification OTS.vk et une signature s, où la signature s se trouve sur la première valeur cryptée $c_1$, la seconde valeur cryptée $c_2$ et une balise t produite selon le procédé de la revendication 1 ou 2, le procédé comprenant au niveau d'un dispositif (120) :

   - la réception du cryptage de groupe c ;
   - la vérification de la signature s par rapport à une clé de vérification OTS.vk ;
   - si la signature s est vérifiée avec succès, décryptage de la première valeur cryptée $c_1$, en utilisant un algorithme de décryptage E1 et la clé de vérification OTS.vk.

4. Le procédé selon la revendication 3, dans lequel la vérification de la signature comprend en outre la vérification qu'un décryptage de la première valeur cryptée $c_1$ satisfait à une relation publique R.

5. Un dispositif (110) permettant le cryptage de groupe d'un texte en clair m par rapport à une balise t pour un destinataire avec une clé publique pk afin d'obtenir un cryptogramme c, le dispositif comprenant, un processeur (112) configuré pour :

   - créer une première valeur cryptée $c_1$ et une seconde valeur cryptée $c_2$, en calculant $c_1$ = $E_1$.Encrypt$_{\{pk\}}$($m$,OTS.$vk$) et $c_2$ = $E_2$.Encrypt$_{\{pkOA\}}$ ($f(pk)$,OTS.$vk$), où $E_1$ est un premier algorithme de cryptage, $E_2$ est un second algorithme de cryptage, pkOA est une autre clé publique, OTS.sk est une clé de signature, OTS.vk est une clé de vérification et f est une fonction de mappage ;
   - produire une signature s sur la première valeur $c_1$, la seconde valeur cryptée $c_2$ et la balise t utilisant la clé de signature OTS.sk en calculant s = OTS. Sign$_{\{OTS.sk\}}$($c_1$,$c_2$,$t$), où OTS.Sign est un algorithme de signature ; et
   - produire le cryptogramme c, où le cryptogramme c comprend la première valeur cryptée $c_1$, la seconde valeur cryptée c2, la clé de vérification OTS.vk et la signature s.

6. Le dispositif selon la revendication 5, dans lequel le message m satisfait à une relation R publiquement vérifiable.

7. Un dispositif (120) permettant de décrypter un cryptage de groupe c comprenant une première valeur cryptée c1, une seconde valeur cryptée c2, une clé de vérification OTS.vk et une signature s, où la signature s se trouve sur la première valeur cryptée $c_1$, la seconde valeur cryptée c2 et une balise t produite selon le procédé de la revendication 1 ou 2, le dispositif (120) comprenant un processeur (122) configuré pour :

- recevoir le cryptage de groupe c ;
- vérifier la signature s par rapport à une clé de vérification OTS.vk ; et
- si la signature s est vérifiée avec succès, décrypter la première valeur cryptée $c_1$, en utilisant un algorithme de décryptage E1 et la clé de vérification OTS.vk.

8. Le dispositif selon la revendication 7, dans lequel le processeur est en outre configuré pour vérifier qu'un décryptage de la première valeur cryptée $c_1$ satisfait à une relation publique R.

9. Un produit de programme informatique (114) ayant stocké des instructions qui, lorsqu'elles sont exécutées par un processeur, effectuent toutes les étapes du procédé de la revendication 1 ou 2.

10. Un produit de programme informatique (124) ayant stocké des instructions qui, lorsqu'elles sont exécutées par un processeur, effectuent toutes les étapes du procédé de la revendication 3 ou 4.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AGGELOS KIAYIAS ; YIANNIS TSIOUNIS ; MOTI YUNG.** Group Encryption. *ASIACRYPT,* 2007, 181-199
- **JULIEN CATHALO ; BENOÎT LIBERT ; MOTI YUNG.** Group Encryption: Non-interactive Realization in the Standard Model. *ASIACRYPT,* 2009, 179-196
- **HOVAV SHACHAM.** A Cramer-Shoup Encryption Scheme from the Linear Assumption and from Progressively Weaker Linear Variants. *Cryptology ePrint Archive, Report 2007/074,* 2007
- **EIKE KILTZ.** Chosen-Ciphertext Security from Tag-Based Encryption. *TCC,* 2006, 581-600
- **JENS GROTH ; AMIT SAHAI.** Efficient Non-interactive Proof Systems for Bilinear Groups. *EUROCRYPT,* 2008, 415-432

- **MASAYUKI ABE ; GEORG FUCHSBAUER ; JENS GROTH ; KRISTIYAN HARALAMBIEV ; MIYAKO OHKUBO.** Structure-Preserving Signatures and Commitments to Group Elements. *CRYPTO,* 2010, 209-236
- **DAVID CASH ; EIKE KILTZ ; VICTOR SHOUP.** The Twin Diffie-Hellman Problem and Applications. *Journal of Cryptology,* 2009, vol. 22 (4), 470-504
- **CLAUS P. SCHNORR.** Efficient signature generationby smart cards. *Journal of Cryptology,* 1991, vol. 4 (3), 161-179
- Group signature schemes and payment systems based on the discrete logarithm problem. **JAN CAMENISCH.** PhD thesis. Hartung-Gorre Verlag, 1998, vol. 2
- **JENS GROTH ; RAFAIL OSTROVSKY ; AMIT SAHAI.** Non-interactive Zaps and New Techniques for NIZK. *CRYPTO,* 2006, 97-111